(19) Europäisches Patentamt
European Patent Office
Office européen des brevets

(11) **EP 4 353 766 A1**

(12) **EUROPEAN PATENT APPLICATION**
published in accordance with Art. 153(4) EPC

(43) Date of publication:
**17.04.2024 Bulletin 2024/16**

(21) Application number: **23747403.6**

(22) Date of filing: **30.01.2023**

(51) International Patent Classification (IPC):
**C08G 63/08** (2006.01)      **C08L 67/04** (2006.01)
**C08K 5/00** (2006.01)

(52) Cooperative Patent Classification (CPC):
**C08G 63/08; C08K 5/00; C08L 67/04;** Y02W 90/10

(86) International application number:
**PCT/KR2023/001319**

(87) International publication number:
**WO 2023/146362 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.01.2022 KR 20220013486
27.01.2023 KR 20230011048**

(71) Applicant: **LG Chem, Ltd.
Yeongdeungpo-gu
Seoul 07336 (KR)**

(72) Inventors:
• **KIM, Yeonsoo
Daejeon 34122 (KR)**

• **LEE, Chaegyu
Daejeon 34122 (KR)**
• **LEE, Myunghan
Daejeon 34122 (KR)**
• **KIM, Chul Woong
Daejeon 34122 (KR)**
• **LEE, Jeongyong
Daejeon 34122 (KR)**
• **CHOI, Jung Yun
Daejeon 34122 (KR)**
• **CHO, Suhyun
Daejeon 34122 (KR)**
• **JEONG, So Dam
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **RESIN COMPRISING POLY(LACTIC ACID-B-3-HYDROXYPROPIONIC ACID) BLOCK COPOLYMER, AND RESIN COMPOSITION AND RESIN MOLDED PRODUCT COMPRISING SAME**

(57) The present specification relates to a resin including a poly(lactic acid-b-3-hydroxypropionic acid) block co-polymer, a resin composition including the same, and a resin molded article.

【Figure 1】

EP 4 353 766 A1

**Description**

[Technical Field]

This application claims the benefits of priorities based on Korean Patent Application No. 10-2022-0013486 filed on January 28, 2022, and Korean Patent Application No. 10-2023-0011048 filed on January 27, 2023, the entire contents of which are incorporated as a part of the present specification.

The present disclosure relates to a resin including a poly(lactic acid-b-3-hydroxypropionic acid) block co-polymer, a resin composition including the same, and a resin molded article.

[Background Art]

Petroleum-based resins such as polystyrene resin and polyethylene that have been commonly used are able to be mass-produced at low costs and have diverse application fields of the resins, but are mostly incinerated thereby emitting carbon dioxide gas or are landfilled when the resins are disposed of, causing problems of environmental pollution. As the issue of microplastic emission caused by waste plastic has recently emerged socially, environmental-friendly materials with 100% bio-component content have been developed.

Polylactic acid resins are a plant-derived resin obtained from plants such as corn, and have received attention as an excellent environmental-friendly material having biodegradable properties. However, existing polylactic acid resins have poor elongation properties, thereby having brittleness, a property of being readily broken, and thus have limits as a general-purpose resin.

In the case of existing biodegradable materials, an additive such as a plasticizer needs to be mixed in order to enhance flexibility and the like, however, those mainly used as a plasticizer and the like correspond to petroleum-based resins, causing problems in that environmental-friendliness or biodegradation is not completely achieved.

In addition, in existing technologies, studies on preparing a block co-polymer using a material such as polybutylene succinate (PBS), which has relatively superior elongation properties while being biodegradable, with a polylactic acid resin in order to improve properties have been conducted, however, PBS has low tensile strength, causing a problem of lowering tensile strength of the block co-polymer as well.

Accordingly, in developing a material with 100% bio-content while maintaining biodegradability, development of a resin with enhanced flexibility has been required.

[Prior Art Document]

[Patent Document]

(Patent Document 1) Japanese Laid-open Patent Publication No. 2006-070057, "Crystalline polylactic acid resin composition and film obtained using the same"

[Disclosure]

[Technical Problem]

In view of the above, the present disclosure is directed to providing a resin with enhanced flexibility by controlling a thickness of a crystalline layer of a resin including a poly(lactic acid-b-3-hydroxypropionic acid) block co-polymer, a resin composition including the same, and a resin molded article.

[Technical Solution]

The present disclosure provides a resin including a poly(lactic acid-b-3-hydroxypropionic acid) block co-polymer, wherein the resin includes a crystalline part, the crystalline part includes a crystalline layer, and the crystalline layer has a thickness of 1.0 nm to 14.0 nm.

In addition, the present disclosure provides a resin, wherein the resin has a molecular weight of 50,000 g/mol to 500,000 g/mol.

In addition, the present disclosure provides a resin, wherein the resin has Young's modulus of 0.1 GPa to 5.0 GPa.

In addition, the present disclosure provides a resin, wherein the resin includes 10% by weight to 30% by weight of poly(3-hydroxypropionic acid) and 90% by weight to 70% by weight of polylactic acid.

In addition, the present disclosure provides a resin composition including the resin.

In addition, the present disclosure provides a resin composition for a soft packaging material, wherein the resin has a crystalline layer thickness of 1.0 nm to 5.0 nm.

In addition, the present disclosure provides a resin composition for a hard packaging material, wherein the resin has a crystalline layer thickness of 5.0 nm to 14.0 nm.

In addition, the present disclosure provides a resin composition, wherein the resin composition further includes an additive.

In addition, the present disclosure provides a resin composition, wherein the additive is biodegradable.

In addition, the present disclosure provides a resin molded article including the resin composition.

In addition, the present disclosure provides a resin molded article for a soft packaging material, wherein the resin has a crystalline layer thickness of 1.0 nm to 5.0 nm.

In addition, the present disclosure provides a resin molded article for a hard packaging material, wherein the resin has a crystalline layer thickness of 5.0 nm to 14.0 nm.

In addition, the present disclosure provides a resin molded article selected from the group consisting of injection molded articles, extrusion molded articles, blow molded articles, films, fibers and sheets.

In addition, the present disclosure provides a soft packaging material including the resin composition.

The soft packaging material may be selected from the group consisting of films for protecting displays, films for attaching windows, films for window envelopes, films for food packaging, bags, industrial packaging films and agricultural films.

In addition, the present disclosure provides a hard packaging material including the resin composition.

The hard packaging material may be selected from the group consisting of disposable cups, food packaging containers, easy peel packaging and egg packs.

[Advantageous Effects]

The present disclosure is capable of providing a resin with enhanced flexibility while maintaining biodegradability. More specifically, the present disclosure provides a resin with enhanced flexibility, a resin composition including the same and a resin molded article, which enables molded article (product) applications to various fields.

[Description of Drawings]

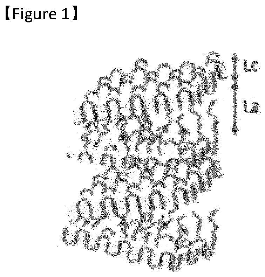

FIG. 1 is a diagram illustrating a crystalline part and an amorphous part of a resin according to one embodiment of the present disclosure.

[Best Mode]

The inventors of the present disclosure have found out that a resin with enhanced flexibility may be provided by controlling a thickness of a crystalline layer of a resin including a poly(lactic acid-b-3-hydroxypropionic acid) block co-polymer to a specific range, and have completed the present disclosure.

This will be described in detail hereinafter.

**Resin**

A term "lactide monomer" used in the present specification means a basic monomer synthesizing polylactic acid. Lactide may be commonly divided into L-lactide formed with L-lactic acid, D-lactide formed with D-lactic acid, and meso-lactide formed with each one of L-form and D-form. In addition, a mixture of L-lactide and D-lactide in a weight ratio of 50:50 is referred to as D,L-lactide or rac-lactide. It is known that L- or D-polylactic acid (PLLA or PDLA) having very high stereoregularity is obtained when polymerization is performed using only L-lactide or D-lactide with high optical purity among these lactides, and such polylactic acid is known to have a high crystallization rate and a high degree of crystallization as well compared to polylactic acid with low optical purity. However, the term "lactide monomer" in the present specification is defined to include all forms of lactide regardless of differences in the properties of lactide depending on each form and differences in the properties of polylactic acid formed therefrom.

A term "polylactic acid (PLA)" used in the present specification refers to an aliphatic polyester synthesized by either synthesizing a pre-polymer from the lactide monomer through a ring-opening polymerization reaction after going through a lactic acid ester, and then performing a number of continuous syntheses, or synthesized by performing dehydration polycondensation of lactic acid. In the present disclosure, the method for synthesizing polylactic acid includes ring-opening polymerization of lactide or dehydration polycondensation of lactic acid, however, the method is not limited thereto and may be the same as a commonly used method for preparing polylactic acid.

A term "poly(3-hydroxypropionic acid) (P(3HP))" used in the present specification refers to a polymer prepared by biosynthesis or chemical synthesis from a 3-hydroxypropionate or propiolactone monomer, and may also be referred to as poly(3-hydroxypropionate). Herein, the "biosynthesis" is synthesizing and preparing a target material using a living organism instead of chemical synthesis, and the living organism may be a microorganism and such a microorganism may be a recombinant microorganism. In addition, the "chemical synthesis" is synthesizing and preparing a target compound from a reaction compound through a chemical reaction, and more specifically, may be synthesizing and preparing poly(3-hydroxypropionic acid), a target compound, either by synthesizing a pre-polymer from a propiolactone monomer through a ring-opening polymerization reaction and then performing a number of continuous syntheses, or by performing polycondensation from a 3-hydroxypropionate monomer.

The "poly(3-hydroxypropionic acid)" may be used without limit as long as it is a synthesizable chemical synthesis as well as biosynthesis, and methods known as biosynthesis or chemical synthesis of poly(3-hydroxypropionate) or poly(3-hydroxypropionic acid) in the art may also be used.

A term "block co-polymer" used in the present specification includes a polylactic acid pre-polymer and a poly(3-hydroxypropionic acid) pre-polymer, and means a co-polymer in which two pre-polymers form a 'block'. For example, poly(lactic acid-b-3-hydroxypropionic acid) (herein, b means a block) may be prepared by preparing a polylactic acid pre-polymer and a poly(3-hydroxypropionic acid) pre-polymer, and then performing dehydration polycondensation at each end of the pre-polymers. In addition, poly(lactic acid-b-3-hydroxypropionic acid) may be prepared by preparing a poly(3-hydroxypropionic acid) pre-polymer, then performing a ring-opening polymerization reaction with a lactide monomer at the pre-polymer end of the poly(3-hydroxypropionic acid), and then forming polylactic acid through elongation from the lactide monomer, however, the method is not limited thereto.

In addition, the category of the co-polymer that may be referred to as the "poly(lactic acid-b-3-hydroxypropionic acid) block co-polymer" includes a polymer in all states (including unpurified or purified state) after completing the ring-opening polymerization and repeating unit-forming process.

A term "resin including a poly(lactic acid-b-3-hydroxypropionic acid) block co-polymer" used in the present specification refers to a liquid or solid resin before product molding. In the present disclosure, simply a resin may be understood to include a poly(lactic acid-b-3-hydroxypropionic acid) block co-polymer.

A term "resin composition including a poly(lactic acid-b-3-hydroxypropionic acid) block co-polymer" used in the present specification means a composition further including an additive and the like in addition to the resin before processing the resin into a molded article (product). The additive may vary depending on the purpose of use or components. In the present disclosure, simply a resin composition may be understood to include a poly(lactic acid-b-3-hydroxypropionic acid) block co-polymer.

A term "resin molded article including a poly(lactic acid-b-3-hydroxypropionic acid) block co-polymer" used in the present specification means an article manufactured to a product by processing the resin composition. The resin molded article may be manufactured into various forms such as injection molded articles, extrusion molded articles, blow molded articles, films, fibers and sheets. In the present disclosure, simply a resin molded article may be understood to include a poly(lactic acid-b-3-hydroxypropionic acid) block co-polymer.

The resin including a poly(lactic acid-b-3-hydroxypropionic acid) block co-polymer according to one embodiment of the present disclosure may have a molecular weight of 50,000 g/mol to 500,000 g/mol, 52,000 g/mol to 500,000 g/mol, 54,000 g/mol to 500,000 g/mol, 56,000 g/mol to 500,000 g/mol, 58,000 g/mol to 500,000 g/mol or 60,000 g/mol to 500,000 g/mol.

The resin including a poly(lactic acid-b-3-hydroxypropionic acid) block co-polymer according to another embodiment of the present disclosure may have a molecular weight of 50,000 g/mol to 480,000 g/mol, 52,000 g/mol to 480,000 g/mol, 54,000 g/mol to 480,000 g/mol, 56,000 g/mol to 480,000 g/mol, 58,000 g/mol to 480,000 g/mol or 60,000 g/mol to 480,000 g/mol.

The resin including a poly(lactic acid-b-3-hydroxypropionic acid) block co-polymer according to another embodiment of the present disclosure may have a molecular weight of 50,000 g/mol to 460,000 g/mol, 52,000 g/mol to 460,000 g/mol, 54,000 g/mol to 460,000 g/mol, 56,000 g/mol to 460,000 g/mol, 58,000 g/mol to 460,000 g/mol or 60,000 g/mol to 460,000 g/mol.

The resin including a poly(lactic acid-b-3-hydroxypropionic acid) block co-polymer according to another embodiment of the present disclosure may have a molecular weight of 50,000 g/mol to 440,000 g/mol, 52,000 g/mol to 440,000 g/mol, 54,000 g/mol to 440,000 g/mol, 56,000 g/mol to 440,000 g/mol, 58,000 g/mol to 440,000 g/mol or 60,000 g/mol to 440,000 g/mol.

The resin including a poly(lactic acid-b-3-hydroxypropionic acid) block co-polymer according to another embodiment of the present disclosure may have a molecular weight of 50,000 g/mol to 420,000 g/mol, 52,000 g/mol to 420,000 g/mol, 54,000 g/mol to 420,000 g/mol, 56,000 g/mol to 420,000 g/mol, 58,000 g/mol to 420,000 g/mol or 60,000 g/mol to 420,000 g/mol.

The resin including a poly(lactic acid-b-3-hydroxypropionic acid) block co-polymer according to another embodiment of the present disclosure may have a molecular weight of 50,000 g/mol to 400,000 g/mol, 52,000 g/mol to 400,000 g/mol, 54,000 g/mol to 400,000 g/mol, 56,000 g/mol to 400,000 g/mol, 58,000 g/mol to 400,000 g/mol or 60,000 g/mol to 400,000 g/mol.

For example, the resin including a poly(lactic acid-b-3-hydroxypropionic acid) block co-polymer may have a molecular weight of 50,000 g/mol to 500,000 g/mol, 52,000 g/mol to 480,000 g/mol, 54,000 g/mol to 460,000 g/mol, 56,000 g/mol to 440,000 g/mol, 58,000 g/mol to 420,000 g/mol or 60,000 g/mol to 400,000 g/mol.

The molecular weight of the resin may be a molecular weight of the whole resin including a poly(lactic acid-b-3-hydroxypropionic acid) block co-polymer. When the molecular weight of the resin is outside the lower limit range, it is difficult to form the poly(lactic acid-b-3-hydroxypropionic acid) block co-polymer and mechanical strength may be weak when manufacturing a resin molded article, and when the molecular weight of the resin is outside the upper limit range, processing into a resin is difficult and it may be difficult to prepare a resin with enhanced flexibility as well.

The resin including a poly(lactic acid-b-3-hydroxypropionic acid) block co-polymer according to one embodiment of the present disclosure may include the polylactic acid content and the poly(3-hydroxypropionic acid) content in 100% by weight.

The resin including a poly(lactic acid-b-3-hydroxypropionic acid) block co-polymer according to another embodiment of the present disclosure may include the poly(3-hydroxypropionic acid) content in 10.0% by weight to 30.0% by weight, 10.5% by weight to 30.0% by weight, 11.0% by weight to 30.0% by weight, 11.5% by weight to 30.0% by weight or 12.0% by weight to 30.0% by weight.

The resin including a poly(lactic acid-b-3-hydroxypropionic acid) block co-polymer according to another embodiment of the present disclosure may include the poly(3-hydroxypropionic acid) content in 10.0% by weight to 29.5% by weight, 10.5% by weight to 29.5% by weight, 11.0% by weight to 29.5% by weight, 11.5% by weight to 29.5% by weight or 12.0% by weight to 29.5% by weight.

The resin including a poly(lactic acid-b-3-hydroxypropionic acid) block co-polymer according to another embodiment of the present disclosure may include the poly(3-hydroxypropionic acid) content in 10.0% by weight to 29.0% by weight, 10.5% by weight to 29.0% by weight, 11.0% by weight to 29.0% by weight, 11.5% by weight to 29.0% by weight or 12.0% by weight to 29.0% by weight.

The resin including a poly(lactic acid-b-3-hydroxypropionic acid) block co-polymer according to another embodiment of the present disclosure may include the poly(3-hydroxypropionic acid) content in 10.0% by weight to 28.5% by weight, 10.5% by weight to 28.5% by weight, 11.0% by weight to 28.5% by weight, 11.5% by weight to 28.5% by weight or 12.0% by weight to 28.5% by weight.

The resin including a poly(lactic acid-b-3-hydroxypropionic acid) block co-polymer according to another embodiment of the present disclosure may include the poly(3-hydroxypropionic acid) content in 10.0% by weight to 28.0% by weight, 10.5% by weight to 28.0% by weight, 11.0% by weight to 28.0% by weight, 11.5% by weight to 28.0% by weight or 12.0% by weight to 28.0% by weight.

For example, the resin including a poly(lactic acid-b-3-hydroxypropionic acid) block co-polymer may include the poly(3-hydroxypropionic acid) content in 10.0% by weight to 30.0% by weight, 10.5% by weight to 29.5% by weight, 11.0% by weight to 29.0% by weight, 11.5% by weight to 28.5% by weight or 12.0 to 28.0% by weight.

When the poly(3-hydroxypropionic acid) content is outside the above-mentioned range, strength is weakened when preparing the resin and a molded article including the same making it difficult to prepare a target molded article, or the polylactic acid content relatively increases making it difficult to prepare a resin with enhanced flexibility.

The resin including a poly(lactic acid-b-3-hydroxypropionic acid) block co-polymer according to another embodiment of the present disclosure may include the polylactic acid content in 90.0% by weight to 70.0% by weight, 89.5% by weight to 70.0% by weight, 89.0% by weight to 70.0% by weight, 88.5% by weight to 70.0% by weight or 88.0% by weight to 70.0% by weight.

The resin including a poly(lactic acid-b-3-hydroxypropionic acid) block co-polymer according to another embodiment of the present disclosure may include the polylactic acid content in 90.0% by weight to 70.5% by weight, 89.5% by weight to 70.5% by weight, 89.0% by weight to 70.5% by weight, 88.5% by weight to 70.5% by weight or 88.0% by weight to 70.5% by weight.

The resin including a poly(lactic acid-b-3-hydroxypropionic acid) block co-polymer according to another embodiment of the present disclosure may include the polylactic acid content in 90.0% by weight to 71.0% by weight, 89.5% by weight to 71.0% by weight, 89.0% by weight to 71.0% by weight, 88.5% by weight to 71.0% by weight or 88.0% by weight to 71.0% by weight.

The resin including a poly(lactic acid-b-3-hydroxypropionic acid) block co-polymer according to another embodiment of the present disclosure may include the polylactic acid content in 90.0% by weight to 71.5% by weight, 89.5% by weight to 71.5% by weight, 89.0% by weight to 71.5% by weight, 88.5% by weight to 71.5% by weight or 88.0% by weight to 71.5% by weight.

The resin including a poly(lactic acid-b-3-hydroxypropionic acid) block co-polymer according to another embodiment of the present disclosure may include the polylactic acid content in 90.0% by weight to 72.0% by weight, 89.5% by weight to 72.0% by weight, 89.0% by weight to 72.0% by weight, 88.5% by weight to 72.0% by weight or 88.0% by weight to 72.0% by weight.

For example, the resin including a poly(lactic acid-b-3-hydroxypropionic acid) block co-polymer may include the polylactic acid content in 90.0 to 70.0% by weight, 89.5 to 70.5% by weight, 89.0 to 71.0% by weight, 88.5 to 71.5% by weight or 88.0 to 72.0% by weight.

When the polylactic acid content is outside the above-mentioned range, strength is weakened when preparing the resin and a molded article including the same making it difficult to prepare a target molded article, or the polylactic acid content relatively increases making it difficult to prepare a resin with enhanced flexibility.

**Crystals of Resin**

The resin including a poly(lactic acid-b-3-hydroxypropionic acid) block co-polymer according to one embodiment of the present disclosure may have semi-crystallinity. Herein, the semi-crystallinity may include a crystalline part and an amorphous part at the same time. The crystalline part refers to a part including crystals in the resin, and the amorphous part is a part other than the crystalline part where crystals are not formed and refers to a part where an amorphous form is present.

More specifically, the crystalline part means a crystalline layer in which crystals form a layer in the resin including a poly(lactic acid-b-3-hydroxypropionic acid) block co-polymer. In the crystalline layer, one part of the poly(lactic acid-b-3-hydroxypropionic acid) block co-polymer is regularly arranged to form a folding part, and the folding part may gather to form a plate shape structure. In other words, the crystalline layer means a layer in which a folding part is formed by one part of the poly(lactic acid-b-3-hydroxypropionic acid) block co-polymer being regularly arranged and a part where one part of the poly(lactic acid-b-3-hydroxypropionic acid) block co-polymer partially binds to the folding part gather to form a plate shape.

The amorphous part includes a part having a region in which one part of the poly(lactic acid-b-3-hydroxypropionic acid) block co-polymer is irregularly arranged. The amorphous part may also include some of a part where partial crystals, which result from crystals in the resin including a poly(lactic acid-b-3-hydroxypropionic acid) block co-polymer being not able to form a crystalline layer, are present.

The amorphous part may include a mobile amorphous phase and a rigid amorphous phase. The mobile amorphous phase and the rigid amorphous phase may be determined depending on whether they bind to the crystalline part. The rigid amorphous phase is located at a boundary between the crystalline part and the amorphous part, and may be a part binding to the crystalline part. The mobile amorphous phase is a part of the amorphous part not in contact with the crystalline part, and may be a part not binding to the crystalline part.

In the resin including a poly(lactic acid-b-3-hydroxypropionic acid) block co-polymer, the crystalline part and the amorphous part may coexist at a temperature lower than a melting temperature (Tm). The resin may have a melting temperature (Tm) of about 160°C to 180°C depending on the molecular weight.

In the resin including a poly(lactic acid-b-3-hydroxypropionic acid) block co-polymer according to the present disclosure, crystals of the resin including both the crystalline part and the amorphous part at a temperature lower than the melting temperature (Tm) will be described.

FIG. 1 is a diagram illustrating the crystalline part and the amorphous part of the resin of one embodiment according to the present disclosure. In FIG. 1, Lc means the crystalline layer of the resin, and the crystalline layer (Lc) of the resin has a structure in which one part of the poly(lactic acid-b-3-hydroxypropionic acid) block co-polymer is regularly arranged to form a plate shape. In addition, the amorphous part (La) is illustrated in one side of the crystalline layer (Lc) of the resin. In the amorphous part (La), one part of the poly(lactic acid-b-3-hydroxypropionic acid) block co-polymer is irregularly arranged, and a particular shape is not present.

A term "crystal thickness" used in the present specification means a thickness of the crystalline layer of the resin including a poly(lactic acid-b-3-hydroxypropionic acid) block co-polymer. The crystal thickness may be obtained using data obtained by thermal analysis of the resin according to the present disclosure. The thermal analysis includes, depending on the measurement parameters, differential scanning calorimetry (DSC), thermogravimetric analysis (TGA), thermomechanical analysis (TMA), differential thermal analysis (DTA) and the like, but is not limited to these examples, and the crystal thickness of the resin may be measured using a scanning electron microscope (SEM) or a transmission electron microscope (TEM).

According to one embodiment of the present disclosure, the crystal thickness of the resin including a poly(lactic acid-b-3-hydroxypropionic acid) block co-polymer may be obtained using measurement data obtained by differential scanning calorimetry.

According to another embodiment of the present disclosure, the crystal thickness of the resin including a poly(lactic acid-b-3-hydroxypropionic acid) block co-polymer may be obtained from the measurement data obtained by the differential scanning calorimetry using the following Mathematical Formula 1.

[Mathematical Formula 1]

$$l = \frac{2\sigma T_m^{\circ}}{\Delta H_f (T_m^{\circ} - T_m)}$$

In Mathematical Formula 1, l is a crystal thickness, $T_m$ is a melting temperature (K), $T_m^{\circ}$ is a melting temperature (K) when it is a perfect crystal, $\Delta H_f$ is an amount of enthalpy change with respect to volume ($J/m^3$), and σ means surface free energy per unit area ($J/m^2$). In Mathematical Formula 1, $T_m^{\circ}$ means a melting temperature when it is a perfect crystal, that is, assuming when the degree of crystallization of a crystalline polymer is 100%. Mathematical Formula 1 is derived based on the Gibbs-Thomson equation based on the thermodynamic crystallization theory of Gibbs-Thomson, and represents a relation between a crystal thickness, a melting temperature and a thermodynamic coefficient. Using Mathematical Formula 1, each crystal thickness value of each crystalline polymer may be derived depending on the melting temperatures.

The crystal thickness of the resin is obtained using data obtained by thermal analysis in the present disclosure as described above, however, when it is difficult to separate peaks from data obtained by the thermal analysis, the crystal thickness of the resin may be obtained using a scanning electron microscope or a transmission electron microscope.

The resin including a poly(lactic acid-b-3-hydroxypropionic acid) block co-polymer according to one embodiment of the present disclosure may have a crystalline layer thickness of 1.0 nm to 14.0 nm, 1.2 nm to 14.0 nm, 1.4 nm to 14.0 nm, 1.6 nm to 14.0 nm, 1.8 nm to 14.0 nm, 2.0 nm to 14.0 nm, 2.2 nm to 14.0 nm, 2.4 nm to 14.0 nm, 2.6 nm to 14.0 nm, 2.8 nm to 14.0 nm or 3.0 nm to 14.0 nm.

The resin including a poly(lactic acid-b-3-hydroxypropionic acid) block co-polymer according to another embodiment of the present disclosure may have a crystalline layer thickness of 1.0 nm to 11.8 nm, 1.2 nm to 11.8 nm, 1.4 nm to 11.8 nm, 1.6 nm to 11.8 nm, 1.8 nm to 11.8 nm, 2.0 nm to 11.8 nm, 2.2 nm to 11.8 nm, 2.4 nm to 11.8 nm, 2.6 nm to 11.8 nm, 2.8 nm to 11.8 nm or 3.0 nm to 11.8 nm.

The resin including a poly(lactic acid-b-3-hydroxypropionic acid) block co-polymer according to another embodiment of the present disclosure may have a crystalline layer thickness of 1.0 nm to 11.6 nm, 1.2 nm to 11.6 nm, 1.4 nm to 11.6nm, 1.6 nm to 11.6 nm, 1.8 nm to 11.6 nm, 2.0 nm to 11.6 nm, 2.2 nm to 11.6 nm, 2.4 nm to 11.6 nm, 2.6 nm to 11.6 nm, 2.8 nm to 11.6 nm or 3.0 nm to 11.6 nm.

The resin including a poly(lactic acid-b-3-hydroxypropionic acid) block co-polymer according to another embodiment of the present disclosure may have a crystalline layer thickness of 1.0 nm to 11.4 nm, 1.2 nm to 11.4 nm, 1.4 nm to 11.4nm, 1.6 nm to 11.4 nm, 1.8 nm to 11.4 nm, 2.0 nm to 11.4 nm, 2.2 nm to 11.4 nm, 2.4 nm to 11.4 nm, 2.6 nm to 11.4 nm, 2.8 nm to 11.4 nm or 3.0 nm to 11.4 nm.

The resin including a poly(lactic acid-b-3-hydroxypropionic acid) block co-polymer according to another embodiment of the present disclosure may have a crystalline layer thickness of 1.0 nm to 11.2 nm, 1.2 nm to 11.2 nm, 1.4 nm to 11.2nm, 1.6 nm to 11.2 nm, 1.8 nm to 11.2 nm, 2.0 nm to 11.2 nm, 2.2 nm to 11.2 nm, 2.4 nm to 11.2 nm, 2.6 nm to 11.2 nm, 2.8 nm to 11.2 nm or 3.0 nm to 11.2 nm.

The resin including a poly(lactic acid-b-3-hydroxypropionic acid) block co-polymer according to another embodiment of the present disclosure may have a crystalline layer thickness of 1.0 nm to 11.0 nm, 1.2 nm to 11.0 nm, 1.4 nm to 11.0nm, 1.6 nm to 11.0 nm, 1.8 nm to 11.0 nm, 2.0 nm to 11.0 nm, 2.2 nm to 11.0 nm, 2.4 nm to 11.0 nm, 2.6 nm to 11.0 nm, 2.8 nm to 11.0 nm or 3.0 nm to 11.0 nm.

For example, the resin including a poly(lactic acid-b-3-hydroxypropionic acid) block co-polymer may have a crystalline layer thickness of 14.0 nm or less, 13.8 nm or less, 13.6 nm or less, 13.4 nm or less, 13.2 nm or less, 13.0 nm or less, 12.8 nm or less, 12.6 nm or less, 12.4 nm or less, 12.2 nm or less, 12.0 nm or less, 11.8 nm or less, 11.6 nm or less, 11.4 nm or less, 11.2 nm or less or 11.0 nm or less, and 1.0 nm or greater, 1.2 nm or greater, 1.4 nm or greater, 1.6 nm or greater, 1.8 nm or greater, 2.0 nm or greater, 2.2 nm or greater, 2.4 nm or greater, 2.6 nm or greater, 2.8 nm or greater or 3.0 nm or greater.

When the thickness of the crystalline layer of the resin is outside the upper limit of the above-mentioned range, Young's modulus of the resin rapidly increases, and flexibility of the resin and a molded article including the same rapidly decreases, resulting in brittleness, a property of being readily broken, when manufacturing a molded article including the resin, and when the thickness is outside the lower limit of the above-mentioned range, strength (rigidity) of the resin rapidly decreases, making it difficult to manufacture a molded article including the resin.

A term "Young's modulus" used in the present specification is one expression of elastic properties, and means initial tensile resistance, that is, elastic modulus or coefficient of elasticity. In addition, it is the same as pulling force when stretching to the maximum position capable of returning to its original state after elongation, that is, tensile strength.

Young's modulus is the amount of force required at the beginning of very small elongation and is related to rigidity and flexibility of a resin. For example, having a large Young's modulus value means a rigid and stiff resin, and having a small Young's modulus value means a flexible resin.

As the Young's modulus of the resin including a poly(lactic acid-b-3-hydroxypropionic acid) block co-polymer according to one embodiment of the present disclosure, force and strain are continuously measured while applying force to the specimen in one direction. Axial stress is determined by dividing the load of the specimen by the initial cross-sectional area. A proper slope is obtained through the stress-strain curve while increasing or decreasing the force. A specific method for measuring Young's modulus for the resin of the present disclosure is described in the following experimental example.

The resin including a poly(lactic acid-b-3-hydroxypropionic acid) block co-polymer according to one embodiment of the present disclosure may have Young's modulus of 0.1 GPa to 5.0 GPa, 0.2 GPa to 5.0 GPa, 0.3 GPa to 5.0 GPa, 0.4 GPa to 5.0 GPa or 0.5 GPa to 5.0 GPa.

The resin including a poly(lactic acid-b-3-hydroxypropionic acid) block co-polymer according to another embodiment of the present disclosure may have Young's modulus of 0.1 GPa to 4.9 GPa, 0.2 GPa to 4.9 GPa, 0.3 GPa to 4.9 GPa, 0.4 GPa to 4.9 GPa or 0.5 GPa to 4.9 GPa.

The resin including a poly(lactic acid-b-3-hydroxypropionic acid) block co-polymer according to another embodiment of the present disclosure may have Young's modulus of 0.1 GPa to 4.8 GPa, 0.2 GPa to 4.8 GPa, 0.3 GPa to 4.8 GPa, 0.4 GPa to 4.8 GPa or 0.5 GPa to 4.8 GPa.

The resin including a poly(lactic acid-b-3-hydroxypropionic acid) block co-polymer according to another embodiment of the present disclosure may have Young's modulus of 0.1 GPa to 4.7 GPa, 0.2 GPa to 4.7 GPa, 0.3 GPa to 4.7 GPa, 0.4 GPa to 4.7 GPa or 0.5 GPa to 4.7 GPa.

The resin including a poly(lactic acid-b-3-hydroxypropionic acid) block co-polymer according to another embodiment of the present disclosure may have Young's modulus of 0.1 GPa to 4.6 GPa, 0.2 GPa to 4.6 GPa, 0.3 GPa to 4.6 GPa, 0.4 GPa to 4.6 GPa or 0.5 GPa to 4.6 GPa.

For example, the resin including a poly(lactic acid-b-3-hydroxypropionic acid) block co-polymer may have Young's modulus of 0.1 GPa to 5.0 GPa, 0.2 GPa to 4.9 GPa, 0.3 GPa to 4.8 GPa, 0.4 GPa to 4.7 GPa or 0.5 GPa to 4.6 GPa.

A molded article including the resin including a poly(lactic acid-b-3-hydroxypropionic acid) block co-polymer according to one embodiment of the present disclosure may be used after being processed into various molded articles (products) using a method such as injection molding or extrusion molding. The molded article may be used as an injection molded article, an extrusion molded article, a blow molded article, a film, a fiber, a sheet or the like. In addition, as the film, the molded article may be used as various films such as unstretched, monoaxially stretched, biaxially stretched and inflation films. In addition, as the fiber, the molded article may be used as various fibers such as undrawn yarn, drawn yarn and super drawn yarn.

Specifically, the molded article may be used as an agricultural member such as a fertilizer bag, a sample bag, a soil bag, a flood prevention net, a bait strap or a windbreak net; an agricultural film such as a mulching film; a packaging film for administrating and storing medical solutions and the like; a film for packaging electronic components, semiconductor products and the like; a buffer airbag film for protecting products; a film for packaging calendars, stationeries, clothes and foods; containers and tableware such as a tray, a blister, a knife, a fork, a spoon, a tube, a plastic can, a pouch, a container, a tank or a basket; hot fill containers, containers for microwave cooking; a container packaging material such as a cosmetic container, a shampoo bottle, a bottle for beverages, a cup, candy packaging, a shrink label, a lid material, a window envelope, easy peel packaging, an egg pack, packaging for HDD, a compost bag, record media packaging, a shopping bag or a wrapping film of electrical and electronic components; various clothes, an interior good, a carrier tape, a film for thermosensitive porous printing, a release film, a porous film, a display protection film, a container bag, a credit card, a cash card, an ID card, an IC card, an optical element, a conductive emboss tape, a garbage bag, a vinyl bag, various nets, a toothbrush, a stationery, a clear film or the like.

When the resin including a poly(lactic acid-b-3-hydroxypropionic acid) block co-polymer according to one embodiment of the present disclosure has Young's modulus of 0.1 GPa to 1.0 GPa, the resin may be molded into a soft packaging material.

The soft packaging material may include films for protecting displays; films for attaching a window of containers with window attached; films for attaching window envelopes; various packaging films such as a film for food packaging and a wrap; various bags such as a grocery bag, a food storage bag, a vinyl bag and a garbage bag; industrial packaging films such as packaging wrap vinyl, a stretch film and wrapping vinyl; agricultural films such as a mulching film, but is not limited to these examples.

When the resin including a poly(lactic acid-b-3-hydroxypropionic acid) block co-polymer according to another embodiment of the present disclosure has Young's modulus of 1.0 to 4.0 GPa, the resin may be molded into a hard packaging material.

The hard packaging material may include disposable take-out cups, food packaging containers, easy peel packaging, egg packs; containers and tableware such as a tray, a blister, a knife, a fork, a spoon, a tube, a plastic can, a pouch, a container, a tank or a basket; hot fill containers, containers for microwave cooking; container packaging such as a cosmetic container, a shampoo bottle, a bottle for beverages, a cup, and a wrapping film of electrical and electronic components, but is not limited to these examples.

**Resin Composition**

A term "resin composition" used in the present specification means a composition further including an additive in addition to the resin before processing the resin into a molded article (product). The additive may vary depending to the purpose of use or components.

For example, as the additive for enhancing processability, a nucleating agent, a blowing agent, a lubricant, a heat stabilizer and the like may be included. In addition, as the additive for protection role, a UV inhibitor, an anti-oxidant, a heat stabilizer, a flame retardant, a hydrolytic stabilizer and the like may be included.

In addition, depending on the components, the additive may include an additive of biodegradable component and the like. The additive of biodegradable component may include polylactic acid (PLA), polybutylene succinate (PBS), polybutylene adipate-co-terephthalate (PBAT), polybutylene adipate-co-succinate (PBAS), polycaprolactone (PCL), polyglycolic acid (PGA), polyester urethane (PEU), poly-hydroxyalkanoate (PHA), poly-hydroxybutyrate (PHB), poly-hydroxyvalerate (PHV) and the like, but is not limited to these examples.

The resin composition including a poly(lactic acid-b-3-hydroxypropionic acid) block co-polymer according to one embodiment of the present disclosure may further include an additive. The additive may be formed with 100% biocontent components that are biodegradable. For example, the biodegradable additive may include polylactic acid, polybutylene succinate, polybutylene adipate-co-terephthalate, polybutylene adipate-co-succinate, polycaprolactone, polyglycolic acid, polyester urethane, poly-hydroxyalkanoate, poly-hydroxybutyrate, poly-hydroxyvalerate and the like, but is not limited to these examples.

When the resin including a poly(lactic acid-b-3-hydroxypropionic acid) block co-polymer according to one embodiment of the present disclosure has a crystalline layer thickness of 1.0 nm to 5.0 nm, the resin composition including the resin may be used for a soft packaging material, or may be process into a resin molded article for a soft packaging material.

When the resin including a poly(lactic acid-b-3-hydroxypropionic acid) block co-polymer according to another embodiment of the present disclosure has a crystalline layer thickness of 5.0 nm to 14.0 nm, the resin composition including the resin may be used for a hard packaging material, or may be process into a resin molded article for a hard packaging material.

Descriptions on the soft packaging material and the hard packaging material are the same as the descriptions provided above.

Hereinafter, preferred examples will be provided to help understand the present disclosure, however, the following examples are provided only to more readily understand the present disclosure, and the present disclosure is not limited thereto.

**Example: Preparation of Resin Including Polylactic Acid and Poly(3-hydroxypropionate)**

Example 1

(1) Preparation of Poly(3-hydroxypropionate) Pre-polymer

As a strain for fermentation, E.coli W3110 having GDH and ALDH enzyme genes was used. M9 was used as a medium, and 70 g/L of glycerol was used as a substrate to produce 3-hydroxypropionate.

After that, 25 ml of the aqueous 3-hydroxypropionate solution prepared above was introduced, and water in the 3-hydroxypropionate was removed for 3 hours at 50°C and 50 mbar. After that, oligomerization was performed for 2 hours at 70°C and 20 mbar, then, based on 100 parts by weight of the 3-hydroxypropionate, 0.4 parts by weight of a p-toluenesulfonic acid (p-TSA) catalyst was introduced to the reaction flask, and a melt polycondensation reaction was performed at a temperature of 110°C. After the reaction was finished, the reaction material was dissolved in chloroform, and then extracted with methanol to recover each of poly(3-hydroxypropionate) pre-polymers A to C as follows.

Pre-polymer A: reaction time 6 hours, molecular weight 15,000 g/mol

Pre-polymer B: reaction time 8 hours, molecular weight 20,000 g/mol

Pre-polymer C: reaction time 12 hours, molecular weight 25,000 g/mol

(2) Preparation of Resin Including Poly(lactic acid-b-3-hydroxypropionate)

Lactide (25 g), poly(3-hydroxypropionate) pre-polymer A (5 g) prepared in (1), and tin(II) 2-ethylhexanoate (0.014 g) as a catalyst were introduced to a round bottom flask, and the mixture was vacuum dried for 2 hours at room temperature by applying sufficient vacuum.

After that, the flask was placed in an oil hath pre-heated to 180°C, and after the polymer was all melted, ring-opening polymerization was performed for 90 minutes. After the reaction was finished, the product was taken out, and then the product was devolatilized for about 3 hours at 140°C under a reduced pressure condition of <1 torr to remove the monomers, and finally, a resin including poly(lactic acid-b-3-hydroxypropionate) was prepared.

Example 2

A resin was prepared in the same manner as in Example 1 except that the ring-opening polymerization reaction was performed for 60 minutes.

Example 3

A resin was prepared in the same manner as in Example 1 except that lactide (25 g) and poly(3-hydroxypropionate) pre-polymer B (5 g) were used.

Example 4

A resin was prepared in the same manner as in Example 1 except that lactide (25 g) and poly(3-hydroxypropionate) pre-polymer A (2.5 g) were used.

Example 5

A resin was prepared in the same manner as in Example 1 except that lactide (25 g) and poly(3-hydroxypropionate) pre-polymer C (5 g) were used.

Example 6

A resin was prepared in the same manner as in Example 1 except that lactide (25 g) and poly(3-hydroxypropionate) pre-polymer C (2.5 g) were used.

Example 7

A resin was prepared in the same manner as in Example 1 except that lactide (25 g) and poly(3-hydroxypropionate) pre-polymer B (2.5 g) were used.

Example 8

A resin was prepared in the same manner as in Example 1 except that the ring-opening polymerization reaction was performed for 40 minutes.

Example 9

A resin was prepared in the same manner as in Example 1 except that the ring-opening polymerization reaction was performed for 30 minutes.

Comparative Example 1: Preparation of Resin Including Polylactic Acid

Lactide (25 g) and tin(II) 2-ethylhexanoate (0.014 g) as a catalyst were introduced to a round bottom flask, and the mixture was vacuum dried for 1 hour at room temperature by applying sufficient vacuum.

Afterthat, the flask was placed in an oil hath pre-heated to 180°C, and polymerization was performed for 90 minutes. After the reaction was finished, the product was taken out, and then the product was devolatilized for about 3 hours at 140°C under a reduced pressure condition of <1 torr to remove the monomers, and finally, a resin including polylactic acid was prepared.

The following Table 1 shows a content and a molecular weight of each component included in the resins prepared in Examples 1 to 9 and Comparative Example 1.

[Table 1]

| | Content of P(3HP) (wt%) | Content of PLA (wt%) | Weight Average Molecular Weight (g/mol) |
|---|---|---|---|
| Example 1 | 19 | 81 | 62,757 |
| Example 2 | 22 | 78 | 62,766 |
| Example 3 | 20 | 80 | 80,540 |
| Example 4 | 14 | 86 | 95,068 |
| Example 5 | 19 | 81 | 101,404 |
| Example 6 | 10 | 90 | 246,300 |
| Example 7 | 13 | 87 | 132,898 |
| Example 8 | 26 | 74 | 51,524 |
| Example 9 | 29 | 71 | 46,213 |
| Comparative Example 1 | 0 | 100 | 248,133 |

**Experimental Example 1: Measurement of Crystalline Layer Thickness of Resin i) DSC Measurement of Resin**

DSC measurements for the resins of the examples and the comparative examples were performed as follows: When heating at a rate of 10'C/min at -50°C, a melting point peak was seen at 160°C or higher, and by raising the temperature to 200°C, a 1st heating thermogram was obtained, and by cooling to -50°C at a rate of -10'C/min, a 1st cooling curve was obtained, and then by heating to 200°C at a rate of 10'C/min, a 2nd heating thermogram was obtained, and the crystallization temperature was obtained.

Thermal melting properties of the resin according to the present disclosure were obtained in accordance with JIS K 7121 and JIS K 7122 using DSC 3-Mettler Toledo as a DSC (differential scanning calorimeter) after accurately weighing about 5 mg of the sample.

**ii) Calculation of Crystal Thickness**

The 2nd heating curve was separated using the DSC measurement data, and from the thermogram profile, the crystal thickness of the resin was calculated using Mathematical Formula 1.

**Experimental Example 2: Measurement of Young's Modulus of Resin**

Young's modulus of the resin was measured using the ASTM E 111 method and the Young's modulus was measured using the equipment of Model 5966 (Instron), the specimen standard was ASTM D 412F, and the measurement condition was an elongation rate of 0.001 mm/mm/s.

The following Table 2 shows values obtained by measuring crystalline layer thickness and Young's modulus of each of the resins prepared in Examples 1 to 9 and Comparative Example 1.

[Table 2]

| | Crystalline Layer Thickness (Lc) (nm) | Young's Modulus (Gpa) |
|---|---|---|
| Example 1 | 9.62 | 1.02 |
| Example 2 | 9.76 | 1.13 |
| Example 3 | 10.43 | 1.17 |
| Example 4 | 11.12 | 1.44 |
| Example 5 | 11.33 | 1.24 |

(continued)

|  | Crystalline Layer Thickness (Lc) (nm) | Young's Modulus (Gpa) |
|---|---|---|
| Example 6 | 12.22 | 1.54 |
| Example 7 | 10.26 | 1.52 |
| Example 8 | 9.09 | 0.84 |
| Example 9 | 4.59 | 0.56 |
| Comparative Example 1 | 14.2 | 4.11 |

From the results of Table 2, it was identified that, as the crystalline layer thickness increased, Young's modulus increased as well.

Accordingly, from the resin having a crystalline layer thickness in a specific range, the present disclosure is capable of providing a resin with enhanced flexibility, a resin composition including the same, and a resin molded article.

More specifically, from the resin having a crystalline layer thickness of 1.0 nm to 14.0 nm, the present disclosure is capable of providing a resin with enhanced flexibility, a resin composition including the same, and a resin molded article.

## Claims

1. A resin comprising a poly(lactic acid-b-3-hydroxypropionic acid) block co-polymer,

   wherein the resin includes a crystalline part,
   wherein the crystalline part includes a crystalline layer, and
   wherein the crystalline layer has a thickness of 1.0 nm to 14.0 nm.

2. The resin of claim 1, which has a molecular weight of 50,000 g/mol to 500,000 g/mol.

3. The resin of claim 1, which has Young's modulus of 0.1 GPa to 5.0 GPa.

4. The resin of claim 1, comprising:
   10% by weight to 30% by weight of poly(3-hydroxypropionic acid) and 90% by weight to 70% by weight of polylactic acid.

5. A resin composition comprising the resin of any one of claims 1 to 4.

6. The resin composition of claim 5 for a soft packaging material, wherein the resin has a crystalline layer thickness of 1.0 nm to 5.0 nm.

7. The resin composition of claim 5 for a hard packaging material, wherein the resin has a crystalline layer thickness of 5.0 nm to 14.0 nm.

8. The resin composition of claim 5, further comprising an additive.

9. The resin composition of claim 8, wherein the additive is biodegradable.

10. A resin molded article comprising the resin composition of claim 5.

11. The resin molded article of claim 10 for a soft packaging material, wherein the resin has a crystalline layer thickness of 1.0 nm to 5.0 nm.

12. The resin molded article of claim 10 for a hard packaging material, wherein the resin has a crystalline layer thickness of 5.0 nm to 14.0 nm.

13. The resin molded article of claim 10, which is selected from the group consisting of injection molded articles, extrusion molded articles, blow molded articles, films, fibers and sheets.

**14.** A soft packaging material comprising the resin composition of claim 5.

**15.** The soft packaging material of claim 14, which is selected from the group consisting of films for protecting displays, films for attaching windows, films for window envelopes, films for food packaging, bags, industrial packaging films and agricultural films.

**16.** A hard packaging material comprising the resin composition of claim 5.

**17.** The hard packaging material of claim 16, which is selected from the group consisting of disposable cups, food packaging containers, easy peel packaging and egg packs.

【Figure 1】

## INTERNATIONAL SEARCH REPORT

| International application No. |
| --- |
| **PCT/KR2023/001319** |

**A.  CLASSIFICATION OF SUBJECT MATTER**

C08G 63/08(2006.01)i; C08L 67/04(2006.01)i; C08K 5/00(2006.01)i

According to International Patent Classification (IPC) or to both national classification and IPC

**B.  FIELDS SEARCHED**

Minimum documentation searched (classification system followed by classification symbols)

C08G 63/08(2006.01); B29B 7/00(2006.01); B32B 27/12(2006.01); C08J 5/18(2006.01); C08L 101/16(2006.01); C08L 67/00(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리(락트산-b-3-하이드록시프로피온산)블록 공중합체(poly(lactic acid-b-3-hydroxypropionic acid)block copolymer), 생분해성(biodegradable)

**C.  DOCUMENTS CONSIDERED TO BE RELEVANT**

| Category* | Citation of document, with indication, where appropriate, of the relevant passages | Relevant to claim No. |
| --- | --- | --- |
| X | KR 10-2021-0032296 A (LG CHEM, LTD.) 24 March 2021 (2021-03-24)<br>    See claims 1-14; and paragraphs [0037]-[0080]. | 1-8,10-17 |
| Y |  | 9 |
| Y | KR 10-2021-0111188 A (CJ CHEILJEDANG CORPORATION) 10 September 2021 (2021-09-10)<br>    See claim 8. | 9 |
| A | KR 10-2014-0075468 A (SAMSUNG FINE CHEMICALS CO., LTD.) 19 June 2014 (2014-06-19)<br>    See entire document. | 1-17 |
| A | KR 10-2021-0111186 A (CJ CHEILJEDANG CORPORATION) 10 September 2021 (2021-09-10)<br>    See entire document. | 1-17 |

☑ Further documents are listed in the continuation of Box C.    ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **28 April 2023** | **01 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/001319**

C.      DOCUMENTS CONSIDERED TO BE RELEVANT

| Category* | Citation of document, with indication, where appropriate, of the relevant passages | Relevant to claim No. |
|---|---|---|
| A | KR 10-2015-0120982 A (U.S. PACIFIC NONWOVENS INDUSTRY LIMITED) 28 October 2015 (2015-10-28) See entire document. | 1-17 |

INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| KR | 10-2021-0032296 | A | 24 March 2021 | CN | 114269852 | A | 01 April 2022 |
| | | | | EP | 4032954 | A1 | 27 July 2022 |
| | | | | EP | 4032954 | A4 | 22 February 2023 |
| | | | | JP | 2022-542508 | A | 04 October 2022 |
| | | | | US | 2022-0282030 | A1 | 08 September 2022 |
| | | | | WO | 2021-054721 | A1 | 25 March 2021 |
| KR | 10-2021-0111188 | A | 10 September 2021 | None | | | |
| KR | 10-2014-0075468 | A | 19 June 2014 | None | | | |
| KR | 10-2021-0111186 | A | 10 September 2021 | WO | 2023-008902 | A1 | 02 February 2023 |
| KR | 10-2015-0120982 | A | 28 October 2015 | CA | 2891254 | A1 | 21 August 2014 |
| | | | | EP | 2913361 | A1 | 02 September 2015 |
| | | | | JP | 2016-511785 | A | 21 April 2016 |
| | | | | US | 2015-0353726 | A1 | 10 December 2015 |
| | | | | US | 2017-0073515 | A1 | 16 March 2017 |
| | | | | WO | 2014-124562 | A1 | 21 August 2014 |

International application No.

**PCT/KR2023/001319**

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220013486
- KR 1020230011048

- JP 2006070057 A